# EUROPÄISCHE PATENTSCHRIFT

(11) **EP 0 941 273 B1**
(45) Veröffentlichungstag und Bekanntmachung des Hinweises auf die Patenterteilung: **06.03.2002**
(21) Anmeldenummer: 97951186.2
(22) Anmeldetag: 13.11.1997
(51) Int. Cl.: C08G 73/16, C09D 179/08

(54) **VERFAHREN ZUR HERSTELLUNG CARBOXYL- UND HYDROXYLGRUPPENHALTIGER POLYESTERIMIDE UND DEREN VERWENDUNG IN DRAHTLACKEN**
METHOD FOR THE PRODUCTION OF POLYESTER IMIDES CONTAINING CARBOXYL- AND HYDROXYL GROUPS AND THEIR USAGE IN WIRE ENAMELS
PROCEDE DE PREPARATION DE POLYESTER-IMIDES CONTENANT DES GROUPES CARBOXYLE ET HYDROXYLE ET LEUR UTILISATION DANS DES VERNIS POUR FILS DE FER

(30) Priorität: 26.11.1996 DE 19648830
(43) Veröffentlichungstag der Anmeldung: 15.09.1999
(73) Patentinhaber: SCHENECTADY INTERNATIONAL, INC., Schenectady New York 12309 (US)
(72) Erfinder: GLASPER, Brian, W., East Sussex BN3 7AB (GB); RIX, Geoffrey, C., Petworth, West Sussex GU28 9DX (GB); LIENERT, Klaus-Wilhelm, D-2263 Hamburg (DE)
(74) Vertreter: Fitzner, Uwe, Dr.
(86) Internationale Anmeldenummer: EP9706326
(87) Internationale Veröffentlichungsnummer: WO9823667

(56) Entgegenhaltungen:
- EP-A- 0 055 085
- EP-A- 0 270 788
- WO-A-88/09359
- WO-A-91/07439
- DE-A- 1 445 263

## Beschreibung

### Gebiet der Erfindung

Die Erfindung betrifft ein Verfahren zur Herstellung carboxyl- und hydroxylgruppenhaltiger Polyesterimide, deren Verwendung als Bindemittel sowie Drahtlacke, enthaltend solche Bindemittel.

### Stand der Technik

Die heute üblicherweise eingesetzten Drahtlacke stellen im allgemeinen Lösungen der typischen Bindemittel, wie beispielsweise Polyesterimide in Lösemitteln, gegebenenfalls in Kombination mit handelsüblichen Kohlenwasserstoffverschnitten, dar.

Polyesterimidlacke sind beispielsweise aus der DE-OS 1445263 und 1495100 sowie WO 91/07469 (PCT-EP 90/01911) bekannt. Sie haben aufgrund ihrer guten mechanischen, thermischen und chemischen Eigenschaften eine breite Verwendung in der Drahtlackindustrie gefunden.

Die Herstellung der Polyesterimide erfolgt dabei in bekannter Weise aus Polyolen, Polycarbonsäuren oder deren Derivaten und aus imidbildenden Komponenten.

### Aufgabe und Lösung

Die aus dem Stand der Technik bekannten Drahtlacke auf Basis von Polyesterimiden ermöglichen bei den erwiesen guten Lackeigenschaften allerdings nur begrenzte Lackiergeschwindigkeiten, die maßgeblich von der Verdampfungsrate der niedermolekularen Reaktionsprodukte bei der Härtung der Drahtlacke abhängig sind.

Aufgabe der vorliegenden Erfindung war somit, Drahtlacke zur Verfügung zu stellen, die verbesserte Lackiergeschwindigkeiten ermöglichen und gleichzeitig zu Lackfilmen mit besonders guten Eigenschaften führen, wie insbesondere gute Haftung auf den Drähten, hohe Durchschlagspannung, hohe Erweichungstemperatur, ausreichend hohen Wärmeschock sowie hohe Außenfaserdehnung. Außerdem sollen die Drahtbeschichtungsmittel einen möglichst hohen Festkörpergehalt bei einer für die Verarbeitung günstigen Viskosität aufweisen.

Überraschenderweise wurde gefunden, daß Drahtlacke, enthaltend hydroxyl- und carboxylgruppenhaltige Polyesterimide als Bindemittel, diese Aufgaben hervorragend erfüllen.
Dabei weisen die hydroxyl- und carboxylgruppenhaltigen Polyesterimide Säurezahlen von mindestens 80 mg KOH/g auf und sind aus folgenden monomeren Komponenten aufgebaut:
(A) imidbildende Verbindungen mit mindestens zwei primären Aminogruppen oder mindestens zwei Isocyanatgruppen oder imidbildende Verbindungen mit mindestens einer primären Aminogruppe oder mindestens einer Isocyanatgruppe und mindestens einer weiteren funktionellen Gruppe, ausgewählt aus Hydroxy, Carboxy und/oder Carbonsäureanhydrid,
(B) Polycarbonsäuren und/oder deren Anhydride und/oder deren Ester
   sowie
(C) Polyolen.

Weiterhin von der Erfindung umfaßt ist ein Verfahren zur Herstellung von hydroxyl- und carboxylgruppenhaltigen Polyesterimidharzen, enthaltend die monomeren Komponenten (A), (B) und (C), umfassend folgende Teilschritte (Stufen):
(I) die Umsetzung der Komponente (A) mit einem Teil der Komponente (B) zu einem Polyimid,
(II) die Umsetzung des gemäß Stufe (I) erhaltenen Polyimids mit der Komponente (C) zu einem Polyesterimid und abschließend
(III) die Umsetzung des gemäß Stufe (II) erhaltenen Polyesterimids mit dem restlichen Teil der Komponente (B) zu dem hydroxyl- und carboxylgruppenhaltigen Polyesterimid, mit einer Säurezahl von mindestens 80 mg KOH/g
sowie die Verwendung der solchermaßen hergestellten hydroxyl- und carboxylgruppenhaltigen Polyesterimide als Bindemittel in Beschichtungsmitteln.

### Durchführung der Erfindung

### Die monomeren Komponenten (A), (B) und (C) des erfindungsgemäßen hydroxyl- und carboxylgruppenhaltigen Polyesterimids

Beispielhaft für monomere Komponenten (A) mit primären Aminogruppen seien insbesondere diprimäre Diamine, z.B. Ethylendiamin, Tetramethylendiamin, Hexamethylendiamin, Nonamethylendiamin und andere aliphatische diprimäre Diamine genannt.
Ferner kommen als monomere Komponenten (A) aromatische diprimäre Diamine, wie Benzidin, Diaminodiphenylmethan, Diaminodiphenylsulfon, -sulfoxid, -ether, -tioether, Phenylendiamine, Toluylendiamine sowie Diamine mit drei Benzolkernen im Molekül, z.B. Bis(4-aminophenoxy)-1,4-benzol, in Betracht. In Frage kommen schließlich auch cycloaliphatische Diamine, wie z.B. das 4,4',-Dicyclohexylmethandiamin.
Als aminogruppenhaltige Komponente (A) mit einer weiteren funktionellen Gruppe sind beispielsweise Aminoalkohole verwendbar, z.B. Monoethanolamin und Monopropanolamine, weiterhin Aminocarbonsäuren, wie Glycin, Aminopropansäure, Aminocapronsäuren oder Aminobenzoesäuren, sowie deren Ester oder Anhydride.
Beispiele für Komponenten (A) mit Isocyanatgruppen sind insbesondere diprimäre Isocyanate, z.B. Propylendiisocyanat, Trimethylendiisocyanat, Tetramethylendiisocyanat, Pentamethylendiisocyanat, Hexamethylendiisocyanat, Ethylethylendiisocyanat, 3,3,4-Trimethylhexamethylendiisocyanat, 1,3-Cyclopenthyldiisocyanat, 1,4,-Cyclohexyldiisocyanat, 1,2-Cyclohexyldiisocyanat, 1,3-Phenylendiisocyanat, 1,4-Phenylendiisocyanat, 2,5-Toluylendiisocyanat, 2,6,-Toluylendiisocyanat, 4,4'-Biphenylendiisocyanat, 1,5-Naphtylendiisocyanat, 1,4-Naphtylendiisocyanat, 1-Isocyanatomethyl-5-isocyanato-1,3,3-trimethylcyclohexan, Bis-(4-isocyanatocyclohexyl)-methan, Bis-(4-Isocyanatophenyl)-methan, 4,4'-Diisocyanatodiphenylether und 2,3-Bis-(8-Isocyanatooctyl)-4-octyl-5-hexylcyclohexen. Außerdem sind technisch verfügbare Destillationsschnitte, wie z.B. Desmodur VL® oder Voranate M590®, einsetzbar. Bevorzugt eingesetzt werden Desmodur VL®, Voranate M590®, ein Isomerengemisch aus den Toluylendiisocyanaten, sowie Bis-(4-Isocyanatophenyl)methan.

Als Komponente (B) geeignete Polycarbonsäuren sind beispielsweise: Phthalsäure, Isophthalsäure, Terephthalsäure, 2,6-Naphthalindicarbonsäure, sowie deren veresterbare Derivate, z.B. Anhydride und die niederen Alkylester der genannten Säuren, z.B. Methyl-, Ethyl-, Propyl-, Butyl-, Amyl-, Hexyl- und Octylester. Einsetzbar sind auch hier sowohl die Halbester, die Diacylester wie auch die Mischungen dieser Verbindungen. Ebenso kommen auch die Säurehalogenide in Betracht. Bevorzugte Komponenten (B) sind Verbindungen mit einer cyclischen Carbonsäureanhydridgruppierung und weiteren funktionellen Gruppen, wie besonders bevorzugt Pyromellithsäuredianhydrid und Trimellithsäureanhydrid. Es kommen jedoch auch andere aromatische Carbonsäureanhydride in als Komponente (B) in Frage, beispielsweise die Naphthalintetracarbonsäuredianhydride oder Dianhydride von Tetracarbonsäuren mit zwei Benzolkernen im Molekül, bei denen die Carboxylgruppen in 3,3'4- und 4'-Stellung stehen.
Als Komponente (B) kommen auch aliphatische Dicarbonsäuren, z.B. Oxalsäure, Malonsäure, Bernsteinsäure, Glutarsäure, Adipinsäure, Pimelinsäure, Acelainsäure, Sebacinsäure, Maleinsäure, Fumarsäure oder Sorbinsäure, sowie deren veresterbare oder umesterbare Derivate, in Frage.

Als Komponente (C) geeignete Alkohole sind insbesondere Diole und Triole. Beispiele sind Ethylenglykol, 1,2-und 1,3-Propylenglykol, 1,2-, 1,3- und 1,4-Butandiol, 1,5-Pentandiol, Neopentylglykol, Diethylenglykol, Triethylenglykol, Glycerin, Trimethylolethan, Trimethylolpropan und Tris-2-Hydroxyethylisocyanurat. Das zuletzt genannte Triol kommt für die Polyesterimidharze bevorzugt zum Einsatz. Dessen Verwendung führt zu besonders hohen Erweichungstemperaturen des Drahtbeschichtungsmittels.
Besonders bevorzugt als Komponente (C) wird der Einsatz eines Gemisches von Diolen und Triolen. Hier kommen insbesondere Gemische von Ethylenglykol und Tris-2-Hydroxyethylisocyanurat zum Einsatz.

### Das erfindungsgemäße Verfahren zur Herstellung der hydroxyl- und carboxylgruppenhaltigen Polyesterimide und die solchermaßen hergestellten hydroxyl- und carboxylgruppenhaltigen Polyesterimide

Das erfindungsgemäße Verfahren zur Herstellung der hydroxyl- und carboxylgruppenhaltigen Polyesterimid wird in drei Stufen durchgeführt:
(I) die Komponente (A) wird mit einem Teil, vorzugsweise 50 bis 90 Gew.-%, bezogen auf (B), der Komponente (B) zu einem Polyimid umgesetzt,
(II) das gemäß Stufe (I) erhaltene Polyimid wird mit der Komponente (C) zu einem Polyesterimid umgesetzt und abschließend
(III) das gemäß Stufe (II) erhaltene Polyesterimid wird mit dem restlichen Teil der Komponente (B), vorzugsweise 10 bis 50 Gew.-%, bezogen auf (B), zu dem hydroxyl- und carboxylgruppenhaltigen Polyesterimid umgesetzt.

Die gemäß Stufe (I) hergestellten Polyimide werden vorzugsweise durch Reaktion zwischen Komponente (B), wobei bevorzugt 50 bis 90 Gew.-% der Komponente (B), bezogen auf die insgesamt eingesetzte Menge an (B), eingesetzt werden, wobei (B) besonders bevorzugt eine fünfgliedrige, cyclische Carbonsäureanhydridgruppierung sowie mindestens eine weitere funktionelle Carboxyl-, Ester und/oder Anhydridgruppe besitzt, und der Komponente (A) erhalten, die bevorzugt primäre Amino- oder Isocyanatgruppen aufweisen.
Als Reaktionsmedium dienen organische Lösemittel, vorzugsweise Kresol.
Eine Modifizierung dieses Herstellungsverfahrens besteht darin, daß die Komponenten (A) und (B) in der Schmelze zum Polyimid kondensiert werden.

Zur Herstellung der Polyesterimidharze gemäß Stufe (II) des erfindungsgemäßen Verfahrens aus dem gemäß Stufe (I) erhaltenen Polyimid und der Komponente (C) werden die bekannten Umesterungskatalysatoren verwendet, wie sie bereits oben bei der Herstellung der Polyesterharze erwähnt worden sind. Beispielsweise kommen Schwermetallsalze, organische Titanate, Cerverbindungen sowie organische Säuren wie p-Toluolsulfonsäure in Betracht. Beispiele für Schwermetallsalze sind Bleiacetat und Zinkacetat. Zu den einsetzbaren Titanaten gehören beispielsweise Tetramethyltitanat, Tetraethyltitanat, Tetraisopropyltitanat, Tetrapropyltitanat, Tetrabutyltitanat, Tetraamyltitanat, Tetrahexyltitanat, Diisopropyldibutyltitanat oder Amyltitanate wie Tetraphenyltitanat, Tetracresyltitanat, Tetrahexyltitanat oder auch Triethanolamintitanat.
Auch die Verfahrensstufe (II) kann in den organischen Lösemitteln, wie für Stufe (I) genannt, oder in der Schmelze durchgeführt werden.

In der abschließenden Stufe (III) des erfindungsgemäßen Verfahrens wird das gemäß Stufe (II) gebildete Polyesterimid mit dem verbliebenen Teil, vorzugsweise 10 bis 50 Gew.-%, bezogen auf die insgesamt eingesetzte Menge an (B), der Komponente (B) umgesetzt. Die Umsetzung erfolgt wiederum in organischen Lösemitteln oder in der Schmelze, vorzugsweise in Gegenwart der schon genannten Umesterungskatalysatoren.

Das nach dem erfindungsgemäßen Verfahren resultierende hydroxyl- und carboxylgruppenhaltige Polyesterimid weist bevorzugt eine Säurezahl >80 mg KOH/g, besonders bevorzugt eine Säurezahl zwischen 80 und 120 mg KOH/g, und weiterhin bevorzugt eine OH-Zahl zwischen 100 und 150 mg KOH/g auf.

### Die Drahtlacke, enthaltend die erfindungsgemäß hergestellten hydroxyl- und caboxylgruppenhaltigen Polyesterimide

Die erfindungsgemäßen Drahtlacke enthalten die erfindungsgemäßen hydroxyl- und carboxylgruppenhaltigen Polyesterimidharze bevorzugt in Mengen von 15 bis 75 Gew.-%, besonders bevorzugt 30 bis 55 Gew.-%, bezogen auf das Gesamtgewicht des Drahtbeschichtungsmittels.

Für die erfindungsgemäßen Drahtlacke geeignete organische Lösemittel sind kresolische und weitere organische Lösemittel. Beispiele sind Kresol, Phenol, Glykolether, Dimethylglykol, Ethylglykol, Isopropylglykol, Butylglykol, Methyldiglykol, Ethyldiglykol, Butyldiglykol, Phenylglykol. In Betracht kommen auch Glykoletherester, beispielsweise Methylglykolacetat, Ethylglykolacetat, Butylglykolacetat und Methoxypropylacetat.
Weitere Beispiele sind cyclische Carbonate, beispielsweise Polypropylencarbonat, cyclische Ester wie beispielsweise Gamma-Butyrolacton sowie Dimethylformamid, N,N-Dimethylacetamid und N-Methylpyrolidon. Weiterhin können auch aromatische Lösemittel, Benzylalkohol, gegebenenfalls in Kombination mit den genannten Lösemitteln eingesetzt werden.
Die organischen Lösemittel können teilweise durch Verschnittmittel ersetzt werden. Vorzugsweise werden entweder reines Lösemittel bzw. Gemische reiner Lösemittel oder Lösemittel mit bis zu 40 Gew.-%, bezogen auf deren Gesamtgewicht, Verschnittmittel verwendet. Beispiele für geeignete Verschnittmittel sind Xylol, Solventnaphtha®, Toluol, Ethylbenzol, Cumol, Schwerbenzol, verschiedene Solvesso®- und Shellsol®-Typen sowie Deasol®.

Vorteilhafterweise enthalten die erfindungsgemäßen Drahtlacke 0,5 bis 5,0 Gew.-%, vorzugsweise 0,5 bis 4,0 Gew.-% eines Phenolharzes, bezogen auf das Gesamtgewicht des Drahtlacks.
Geeignete Phenolharze sind bekannte Kondensationsprodukte von Phenol, substituierten Phenolen oder Bisphenol-A mit Formaldehyd. Die Eigenschaften der Phenolharze hängen von der Art der Phenolkomponente und der Aldehydkomponente ab, von dem bei der Herstellung eingestellten pH-Wert und vom Mengenverhältnis der beiden Reaktionspartner ab. Gemäß der vorliegenden Erfindung können Phenolharze auch durch den Einbau anderer Verbindungen bei der Polykondensation sowie durch nachträgliche Modifizierung des Phenolharzes und unterschiedliche Führung des Reaktionsprozesses modifiziert werden. Selbstverständlich sind neben den Kondensationsprodukten mit Formaldehyd auch solche mit anderen Aldehyden verwendbar.

Als Vernetzungskatalysatoren bei der Aushärtung der erfindungsgemäßen Drahtlacke können die schon oben genannten Umesterungskatalysatoren - zweckmäßigerweise in einem Anteil bis zu 5 Gew.-%, vorzugsweise bis zu 3 Gew.-%, bezogen auf das Bindemittel - verwendet werden.

Drahtlacke mit besonders guten Eigenschaften setzen sich wie folgt zusammen:
(a) 30 bis 55 Gew.-% des erfindungsgemäßen hydroxyl- und carboxylgruppenhaltigen Polyesterimidharzes,
(b) 0,5 bis 2,5 Gew.-%, vorzugsweise 0,5 bis 1,5 Gew.-%, des Katalysators
(c) 38,5 bis 69 Gew.-% des organischen Lösemittels, bzw. des Lösemittelgemisches
(d) 0,5 bis 5,0 Gew.-%, vorzugsweise 0,5 bis 4,0 Gew.-%, des Phenolharzes,
jeweils bezogen auf das Gesamtgewicht des Drahtlacks.

Außerdem können die erfindungsgemäßen Drahtbeschichtungsmittel noch übliche Hilfsmittel und Additive enthalten. Bevorzugt werden Mengen bis zu 1 Gew.-% bezogen auf das Gesamtgewicht der Drahtlack-Komponenten (a) bis (d). Als Hilfsstoffe für die Drahtlacke können beispielsweise verlaufsverbessernde Melaminharze oder Verlaufsmittel auf Basis von Polyacrylaten eingesetzt werden.

Die erfindungsgemäßen Drahtlacke werden mittels üblicher Drahtlackiermaschinen aufgebracht und gehärtet. Dabei wird die jeweils erforderliche Lackfilmstärke durch mindestens 1 bis zu 10 Einzelaufträgen aufgebaut, wobei jeder einzelne Lackauftrag vor dem erneuten Lackauftrag blasenfrei ausgehärtet wird. Übliche Lackiermaschinen arbeiten mit Abzugsgeschwindigkeiten von 5 bis zu 180 m/min, je nach Dicke des zu beschichtenden Drahtes. Typische Ofentemperaturen liegen zwischen 300 und 550°C. Die lackierten Drähte werden nach IEC 851 geprüft.

Überraschend, und für den Fachmann nicht vorhersehbar ist, daß das Eigenschaftsniveau des erhaltenen Lackdrahtes hervorragend ist, obwohl der Aufbau des Harzes von dem eines üblichen stark abweicht und die Lackiergeschwindigkeit erheblich höher als bei einem Standardlack ist.

Die im folgenden aufgeführten Beispiele sollen die Erfindung erläutern.

### Beispiele

### Beispiel 1: Herstellung eines Drahtlacks DL1, enthaltend das erfindungsgemäße carboxylgruppenhaltige Polyesterimid PEI1

Gemäß Stufe (I) des erfindungsgemäßen Verfahrens werden 166.7 g Voranate® M 590 (Polyisocyanat mit einer mittleren Isocyanatfunktionalität von ca. 2,7: Hersteller Dow Chemical: Komponente (A)) und 632 g Trimellithsäureanhydrid (Komponente (B)) gemeinsam mit 291.3 g Kresol in einem Dreihalskolben erwärmt. Das bei der Reaktion entstehende Kohlendioxid soll sich dabei gleichmäßig bilden. Die Reaktion ist beendet, wenn die Gasentwicklung vorbei ist.
Der Ansatz wird gemäß Stufe (II) des erfindungsgemäßen Verfahrens mit 100.0 g Kresol 74.0 g Ethylenglykol (Komponente (C)), 23.0 g Tris-2-Hydroxiethylisocyanurat (Komponente (C)) und 2 g Tetra-n-Butyltitanat versetzt. Es wird gleichmäßig auf 200°C erwärmt, bis eine Viskosität von 680 mPas bei 80°C erreicht wird.
Gemäß Stufe (III) des erfindungsgemäßen Verfahrens werden in den abgekühlten Ansatz 66.7 g Kresol und 70.3 g Trimellithsäureanhydrid (Komponente (B)) gegeben und es wird erneut auf 200°C erwärmt. Erreicht die Viskosität den Wert von 850 mPas bei 100°C wird gekühlt. Die Reaktionsmischung wird mit 107.5 g einer 10 %-igen Lösung von Tetra-n-Butyltitanat in Kresol, 216.7 g Kresol und 283.3 g Solventnaphtha® versetzt.

Der resultierende Drahtlack DL1 hat bei einem Festkörpergehalt von 35.1 % eine Viskosität von 1360 mPas. Das Polyesterimidharz PEI1 weist eine Säurezahl von 100 mg KOH/g und eine OH-Zahl von 140 mg KOH/g auf.

### Beispiel 2: Herstellung eines Drahtlacks DL2, enthaltend das erfindungsgemäße carboxylgruppenhaltige Polyesterimid PEI2

Gemäß Stufe 1 des erfindungsgemäßen Verfahrens werden 150.0 g Voranate® M590 (Polyisocyanat mit einer mittleren Isocyanatfunktionalität von ca. 2,7: Hersteller Dow Chemical: Komponente (A)) und 208.8 g Trimellithsäureanhydrid (Komponente (B)) 262.2 g Kresol in einem Dreihalskolben erwärmt. Das bei der Reaktion entstehende Kohlendioxid soll sich dabei gleichmäßig bilden. Die Reaktion ist beendet, wenn die Gasentwicklung vorbei ist.
Der Ansatz wird gemäß Stufe (II) des erfindungsgemäßen Verfahrens mit 90.0 g Kresol, 59.3 g Ethylenglykol (Komponente (C)), 41.5 g Tris-2-Hydroxyethylisocyanurat (Komponente (C)) und 1.8 g Tetra-n-Butyltitanat versetzt. Es wird gleichmäßig auf 200°C erwärmt, bis eine Viskosität von 600 mPas bei 80°C erreicht wird.
Gemäß Stufe (III) des erfindungsgemäßen Verfahrens werden in den abgekühlten Ansatz 45.0 g Kresol und 63.3 g Trimellithsäureanhydrid (Komponente (B)) gegeben und es wird erneut auf 200°C erwärmt. Erreicht die Viskosität den Wert von 620 mPas bei 100°C wird gekühlt. Die Reaktionsmischung wird mit 195.0 g Kresol, 255 g Solventnaphtha® und 96.8 g einer 10%-igen Tetra-n-Butyltitanatlösung in Kresol versetzt.
Der resultierende Drahtlack DL2 hat bei einem Festkörper von 36.3 % eine Viskosität von 1520 mPas. Das Polyesterimidharz PEI2 weist eine Säurezahl von 90 mg KOH/g und eine OH-Zahl von 126 mg KOH/g auf.

### Beispiel 3: Herstellung eines Drahtlacks DL' enthaltend ein nach einem aus dem Stand der Technik bekannten Verfahren hergestelltes Polyesterimid PEI'

Aus 45.7 g Ethylenglykol (Komponente (C)), 11.9 g Tris-2-Hydroxyethylisocyanurat (Komponente (C)), 314.2 g Kresol, 102.2 g Dimethylterephthalat (Komponente (B)) und 0.4 g Tetra-n-Butyltitanat wird durch Erhitzen auf 200°C ein Polyesterharz hergestellt. Der Ansatz wird auf 90°C abgekühlt und 69.5 g Diaminodiphenylmethan (Komponente (A)) und 134.8 g Trimellithsäureanhydrid (Komponente (B)) werden hinzugegeben. Durch Aufheizen auf 200°C wird ein Polyesterimid hergestellt. Mit 70.0 g Kresol und 70.0 g Solventnaphta® wird die Reaktionsmischung verdünnt.
**Der resultierende Drahtlack DL' hat bei 40 % Festkörper eine Viskosität von 800 mPas. Das Polyesterimidharz PEI' weist eine Säurezahl von 20 mg KOH/g und eine OH-Zahl von 170 mg KOH/g auf.**

Die drei Drahtlacke DL1, DL2 und DL' werden wie folgt auf Kupferdraht lackiert:

| | |
|---|---|
| Ofen | MAG AW/1A |
| Temperatur | 520°C |
| Auftragssystem | Düsen |
| Drahtdurchmesser | 0.71 mm |
| Zahl der Durchzüge | 10 |
| Zunahmegrad | 2 L |

Die lackierten Kupferdrähte werden nach IEC 851 geprüft.

### Lackierergebnisse:

| | DL1 | DL2 | DL' |
|---|---|---|---|
| Abzugsgeschwindigkeit (m/min) | 38 | 38 | 32 |
| Außenfaserdehnung 1*d + x (%) | 20 | 25 | 25 |
| Wärmeschock 1*d + 10% bei °C | 250 | 260 | 200 |
| Durchschlagspannung (kV) | 9.0 | 9.0 | 9.2 |
| Erweichungstemperatur (°C) | 400 | 400 | 400 |

Wie aus den Lackierergebnissen zu ersehen ist, erlauben die erfindungsgemäßen Drahtlacke eine beträchtlich höhere Lackiergeschwindigkeit (Abzugsgeschwindigkeit) und zeigen ein hervorragendes Eigenschaftsniveau.

## Patentansprüche

1. Verfahren zur Herstellung von hydroxyl- und carboxylgruppenhaltigen Polyesterimidharzen, enthaltend als monomere Komponenten:
(A) imidbildende Verbindungen mit mindestens zwei primären Aminogruppen oder mindestens zwei Isocyanatgruppen oder imidbildende Verbindungen mit mindestens einer primären Aminogruppe oder mindestens einer Isocyanatgruppe und mindestens einer weiteren funktionellen Gruppe, ausgewählt aus Hydroxy, Carboxy und/oder Carbonsäureanhydrid,
(B) Polycarbonsäuren und/oder deren Anhydride und/oder deren Ester
sowie
(C) Polyole,
**dadurch gekennzeichnet, daß**
(I) die Komponente (A) mit einem Teil der Komponente (B) zu einem Polyimid umgesetzt wird,
(II) das gemäß Stufe (I) erhaltene Polyimid mit der Komponente (C) zu einem Polyesterimid umgesetzt wird und abschließend
(III) das gemäß Stufe (II) erhaltene Polyesterimid mit dem restlichen Teil der Komponente (B) zu dem hydroxyl- und carboxylgruppenhaltigen Polyesterimid, umgesetzt wird, mit einer Säurezahl von mindestens 80 mg KOH/g

2. Verfahren nach Anspruch 1,
**dadurch gekennzeichnet, daß** das gemäß Stufe (III) erhaltene hydroxyl- und carboxylgruppenhaltige Polyesterimid eine Säurezahl von mindestens 80 mg KOH/g aufweist.

3. Verfahren nach Anspruch 1 oder 2,
**dadurch gekennzeichnet, daß** als Komponente (A) eine Verbindung, ausgewählt aus der Gruppe Polyisocyanate, Polyamine mit mindestens zwei primären Aminogruppen, Aminoalkohole mit mindestens einer primären Aminogruppe und/oder Aminosäuren mit mindestens einer primären Aminogruppe, eingesetzt wird.

4. Verfahren nach einem der Ansprüche 1 bis 3,
**dadurch gekennzeichnet, daß** als Komponente (B) ein Polycarbonsäureanhydrid mit mindestens einer cyclischen fünfgliedrigen Carbonsäureanhydridstruktur und mindestens einer weiteren Carbonsäuregruppe und/oder Carbonsäureanhydridgruppe eingesetzt wird.

5. Verfahren nach einem der Ansprüche 1 bis 4,
**dadurch gekennzeichnet, daß** als Komponente (C) ein Diol und/oder ein Triol eingesetzt wird.

6. Verfahren nach einem der Ansprüche 1 bis 5,
**dadurch gekennzeichnet, daß** die Komponente (C) zumindest teilweise aus Tris-2-hydroxyethylisocyanurat besteht.

7. Verwendung von den gemäß den Verfahren nach einem der Ansprüche 1 bis 6 hergestellten hydroxyl- und carboxylgruppenhaltigen Polyesterimiden als Bindemittel in Beschichtungsmitteln.

8. Drahtlack, enthaltend als Bindemittel mindestens ein hydroxyl- und carboxylgruppenhaltiges Polyesterimid, hergestellt nach einem der Ansprüche 1 - 6.

9. Drahtlack nach Anspruch 8,
**dadurch gekennzeichnet, daß** das hydroxyl- und carboxylgruppenhaltige Polyesterimid als monomere Komponenten enthält:
(A) imidbildende Verbindungen mit mindestens zwei primären Aminogruppen oder mindestens zwei Isocyanatgruppen oder imidbildende Verbindungen mit mindestens einer primären Aminogruppe oder mindestens einer Isocyanatgruppe und mindestens einer weiteren funktionellen Gruppe, ausgewählt aus Hydroxy, Carboxy und/oder Carbonsäureanhydrid,
(B) Polycarbonsäuren und/oder deren Anhydride und/oder deren Ester
sowie
(C) Polyole.

10. Drahtlack nach Anspruch 9,
**dadurch gekennzeichnet, daß** als Komponente (A) eine Verbindung, ausgewählt aus der Gruppe Polyisocyanate, Polyamine mit mindestens zwei primären Aminogruppen, Aminoalkohole mit mindestens einer primären Aminogruppe und/oder Aminosäuren mit mindestens einer primären Aminogruppe, eingesetzt wird.

11. Drahtlack nach einem der Ansprüche 9 oder 10,
**dadurch gekennzeichnet, daß** als Komponente (B) ein Polycarbonsäureanhydrid mit mindestens einer cyclischen fünfgliedrigen Carbonsäureanhydridstruktur und mindestens einer weiteren Carbonsäuregruppe und/oder Carbonsäureanhydridgruppe eingesetzt wird.

12. Drahtlack nach einem der Ansprüche 9 bis 11,
**dadurch gekennzeichnet, daß** als Komponente (C) ein Diol und/oder ein Triol eingesetzt wird.

13. Drahtlack nach einem der Ansprüche 9 bis 12,
**dadurch gekennzeichnet, daß** die Komponente (C) zumindest teilweise aus Tris-2-hydroxyethylisocyanurat besteht.

14. Drahtlack nach einem der Ansprüche 8 bis 13,
enthaltend das hydroxyl- und carboxylgruppenhaltige Polyesterimid in Mengen von 15 bis 75 Gew.-%, bezogen auf das Beschichtungsmittel.

15. Drahtlack nach einem der Ansprüche 8 bis 15, enthaltend:
(a) 30 bis 55 Gew.-% des hydroxyl- und carboxylgruppenhaltigen Polyesterimids,
(b) 0,5 bis 2,5 Gew.-% eines Katalysators,
(c) 38,5 bis 69 Gew.-% eines organischen Lösemittels
und
(d) 0,5 bis 5 Gew.-% eines Phenolharzes,
wobei die Summe der Komponenten (a) bis (d) 100 Gew.-% des Drahtlacks ausmacht.

## Claims

1. Process for preparing hydroxyl- and carboxyl-containing polyesterimide resins, comprising as monomeric components:
(A) imide-forming compounds having at least two primary amino groups or at least two isocyanate groups or imide-forming compounds having at least one primary amino group or at least one isocyanate group and at least one further functional group selected from hydroxyl, carboxyl and/or carboxylic anhydride,
(B) polycarboxylic acids and/or their anhydrides and/or their esters
and
(C) polyols,
**characterized in that**
(I) component (A) is reacted with part of component (B) to form a polyimide,
(II) the polyimide obtained in accordance with stage (I) is reacted with component (C) to form a polyesterimide, and finally
(III) the polyesterimide obtained in accordance with stage (II) is reacted with the remaining part of component (B) to form the hydroxyl- and carboxyl-containing polyesterimide, having an acid number of at least 80 mg of KOH/g.

2. Process according to claim 1, **characterized in that** the hydroxyl- and carboxyl-containing polyesterimide obtained in accordance with stage (III) has an acid number of at least 80 mg of KOH/g.

3. Process according to claim 1 or 2, **characterized in that** a compound selected from the group of polyisocyanates, polyamines having at least two primary amino groups, amino alcohols having at least one primary amino group and/or amino acids having at least one primary amino group is employed as component (A).

4. Process according to one of claims 1 to 3, **characterized in that** a polycarboxylic anhydride having at least one cyclic five-membered carboxylic anhydride structure and at least one further carboxylic acid group and/or carboxylic anhydride group is employed as component (B).

5. Process according to one of claims 1 to 4, **characterized in that** a diol and/or a triol is employed as component (C).

6. Process according to one of claims 1 to 5, **characterized in that** component (C) consists at least in part of tris-2-hydroxyethyl isocyanurate.

7. Use of the hydroxyl- and carboxyl-containing polyesterimides prepared in accordance with the processes according to one of claims 1 to 6 as binders in coating compositions.

8. Wire enamel comprising as binder at least one hydroxyl- and carboxyl-containing polyesterimide, prepared in accordance with one of claims 1-6.

9. Wire enamel according to claim 8, **characterized in that** the hydroxyl- and carboxyl-containing polyesterimide comprises as monomeric components:
(A) imide-forming compounds having at least two primary amino groups or at least two isocyanate groups or imide-forming compounds having at least one primary amino group or at least one isocyanate group and at least one further functional group selected from hydroxyl, carboxyl and/or carboxylic anhydride,
(B) polycarboxylic acids and/or their anhydrides and/or their esters
and
(C) polyols.

10. Wire enamel according to claim 9, **characterized in that** a compound selected from the group of polyisocyanates, polyamines having at least two primary amino groups, amino alcohols having at least one primary amino group and/or amino acids having at least one primary amino group is employed as component (A).

11. Wire enamel according to one of claims 9 or 10, **characterized in that** a polycarboxylic anhydride having at least one cyclic five-membered carboxylic anhydride structure and at least one further carboxylic acid group and/or carboxylic anhydride group is employed as component (B).

12. Wire enamel according to one of claims 9 to 11, **characterized in that** a diol and/or a triol is employed as component (C).

13. Wire enamel according to one of claims 9 to 12, **characterized in that** component (C) consists at least in part of tris-2-hydroxyethyl isocyanurate.

14. Wire enamel according to one of claims 8 to 13, comprising the hydroxyl- and carboxyl-containing polyesterimide in amounts from 15 to 75% by weight, based on the coating composition.

15. Wire enamel according to one of claims 8 to 15 [sic], comprising:
(a) from 30 to 55% by weight of the hydroxyl- and carboxyl-containing polyesterimide,
(b) from 0.5 to 2.5% by weight of a catalyst,
(c) from 38.5 to 69% by weight of an organic solvent and
(d) from 0.5 to 5% by weight of a phenolic resin,
the sum of components (a) to (d) making up 100% by weight of the wire enamel.

## Revendications

1. Procédé de préparation de résines de polyesterimides renfermant des groupes hydroxy et carboxy, comprenant en tant que composants monomères
A) des composés formant des imides, ayant au moins deux groupes amino primaires ou au moins deux groupes isocyanate ou des composés formant des imides, ayant au moins un groupe amino primaire ou au moins un groupe isocyanate et au moins un autre groupe fonctionnel choisi parmi un hydroxy, un carboxy et/ou un anhydride carboxylique,
B) des acides polycarboxyliques et/ou leurs anhydrides et/ou leurs esters
ainsi que
C) des polyols,
**caractérisé en ce que**
(I) le composant (A) est mis à réagir avec une partie du composant (B) pour donner lieu à un polyimide,
(II) le polyimide obtenu conformément à l'étape (I) est mis à réagir avec le composant (C) pour donner lieu à un polyesterimide, et enfin
(III) le polyesterimide obtenu conformément à l'étape (II) est mis à réagir avec la partie restante du composant (B) pour donner lieu au polyesterimide renfermant des groupes hydroxy et carboxy, ayant un indice d'acide d'au moins 80 mg KOH/g

2. Procédé selon la revendication 1, **caractérisé en ce que** le polyesterimide renfermant des groupes hydroxy et carboxy obtenu conformément à l'étape (III) présente un indice d'acide d'au moins 80 mg KOH/g.

3. Procédé selon la revendication 1 ou 2, **caractérisé en ce que** l'on utilise, en tant que composant (A), un composé choisi parmi le groupe constitué de polyisocyanates, de polyamines ayant au moins deux groupes amino primaires, d'aminoalcools ayant au moins un groupe amino primaire et/ou d'aminoacides ayant au moins un groupe amino primaire.

4. Procédé selon l'une quelconque des revendications 1 à 3, **caractérisé en ce que** l'on utilise, en tant que composant (B) un anhydride polycarboxylique ayant au moins une structure d'anhydride carboxylique cyclique à cinq chaînons et au moins un autre groupe acide carboxylique et/ou groupe anhydride carboxylique.

5. Procédé selon l'une quelconque des revendications 1 à 4, **caractérisé en ce que** l'on utilise un diol et/ou un triol en tant que composant (C).

6. Procédé selon l'une quelconque des revendications 1 à 5, **caractérisé en ce que** le composant (C) est constitué au moins partiellement d'isocyanurate de tris-2-hydroxyéthyle.

7. Utilisation des polyesterimides renfermant des groupes hydroxy et carboxy préparés selon l'une quelconque des revendications 1 à 6, en tant que liants dans des compositions de revêtements.

8. Vernis isolant comprenant en tant que liant, au moins un polyesterimide renfermant des groupes hydroxy et carboxy, préparé selon l'une quelconque des revendications 1 à 6.

9. Vernis isolant selon la revendication 8, **caractérisé en ce que** le polyesterimide renfermant des groupes hydroxy et carboxy comprend en tant que composants monomères :
A) des composés formant des imides, ayant au moins deux groupes amino primaires ou au moins deux groupes isocyanate ou des composés formant des imides, ayant au moins un groupe amino primaire ou au moins un groupe isocyanate et au moins un autre groupe fonctionnel choisi parmi un hydroxy, un carboxy et/ou un anhydride carboxylique,
B) des acides polycarboxyliques et/ou leurs anhydrides et/ou leurs esters
ainsi que
C) des polyols,

10. Vernis isolant selon la revendication 9, **caractérisé en ce que** l'on utilise, en tant que composant (A), un composé choisi parmi le groupe constitué de polyisocyanates, de polyamines ayant au moins deux groupes amino primaires, d'aminoalcools ayant au moins un groupe amino primaire et/ou d'aminoacides ayant au moins un groupe amino primaire.

11. Vernis isolant selon l'une quelconque des revendications 9 ou 10, **caractérisé en ce que** l'on utilise, en tant que composant (B) un anhydride polycarboxylique ayant au moins une structure d'anhydride carboxylique cyclique à cinq chaînons et au moins un autre groupe acide carboxylique et/ou groupe anhydride carboxylique.

12. Vernis isolant selon l'une quelconque des revendications 9 à 11, **caractérisé en ce que** l'on utilise un diol et/ou un triol en tant que composant (C).

13. Vernis isolant selon l'une quelconque des revendications 9 à 12, **caractérisé en ce que** le composant (C) est constitué au moins partiellement d'isocyanurate de tris-2-hydroxyéthyle.

14. Vernis isolant selon l'une quelconque des revendications 8 à 13, comprenant le polyesterimide renfermant des groupes hydroxy et carboxy en quantités de 15 à 75% en poids, par rapport à la composition de revêtement.

15. Vernis isolant selon l'une quelconque des revendications 8 à 15, comprenant :
(a) de 30 à 55% en poids du polyesterimide renfermant des groupes hydroxy et carboxy,
(b) de 0,5 à 2,5% en poids d'un catalyseur,
(c) de 38,5 à 69% en poids d'un solvant organique et
(d) de 0,5 à 5% en poids d'une résine phénolique,
la somme des composants (a) à (d) constituant 100% en poids du vernis isolant.
